# FASCICULE DE BREVET EUROPEEN

(11) **EP 0 808 729 B1**
(45) Date de publication et mention de la délivrance du brevet: **30.08.2000**
(21) Numéro de dépôt: 97401120.7
(22) Date de dépôt: 21.05.1997
(51) Int. Cl.: B60B 37/00, B60B 37/10, B65F 1/14

(54) **Roue et conteneur notamment à déchets, équipé d'au moins une telle roue**
Rad und Behälter insbesondere für Müll, ausgerüstet mit mindestens einem solchem Rad
Wheel and container in particular for waste, equipped with at least one such a wheel

(30) Priorité: 24.05.1996 FR 9606486
(43) Date de publication de la demande: 26.11.1997
(73) Titulaire: CITEC ENVIRONNEMENT S.A., 92566 Rueil Malmaison (FR)
(72) Inventeur: Cregut, Michel, 92000 Nanterres (FR)
(74) Mandataire: Derambure, Christian

(56) Documents cités:
- EP-A- 0 435 733
- EP-A- 0 508 902
- DE-A- 3 312 590
- DE-A- 3 517 723
- DE-U- 9 418 141
- FR-A- 2 725 939
- US-A- 5 111 549

## Description

L'invention concerne une roue et un conteneur notamment à déchets, équipé d'au moins une telle roue.

On connaît des conteneurs comprenant une cuve constituée d'un fond et d'une paroi latérale, pourvue d'un rebord définissant l'ouverture de la cuve, et généralement d'un couvercle articulé par rapport à la cuve entre deux positions extrêmes d'ouverture et de fermeture, respectivement déplacé en direction d'une face de la paroi latérale et rabattu sur le rebord.

A proximité du fond de la cuve, ces conteneurs sont pourvus de roues, généralement au nombre de deux ou de quatre.

Lorsque ces conteneurs sont utilisés dans les cours d'immeubles, ils sont mis à la disposition des habitants, et vidés périodiquement par les services de voirie. A l'heure actuelle, ces conteneurs sont pour la plupart réalisés en matière plastique, telle que polyéthylène.

A titre d'exemple, citons des documents concernant de tels conteneurs.

Le document EP-A-435.733 décrit un conteneur équipé de patins en matière élastique, faisant saillie entre la face inférieure du couvercle et le rebord de la cuve pour amortir le contact de fermeture du couvercle.

Le document DE-A-35.17.723 décrit aussi un conteneur équipé de patins d'amortissement rapportés, en matière élastique.

Un roue ayant les caractéristiques du préambule de la revendication 1 est décrit dans le document EP-A-0 508 902.

Un inconvénient de ces conteneurs est qu'ils sont relativement bruyants, en particulier lors de leur déplacement.

Dans le cadre de l'intégration de tels conteneurs dans la cité, il a été recherché des solutions techniques pour réduire les bruits induits par leur utilisation.

Parmi les axes de recherche choisis, la plupart sont relatifs aux bruits d'ouverture et de fermeture des couvercles, comme dans les documents cités.

L'axe de recherche de l'invention vise à réduire les bruits de roulement d'un conteneur de collecte de déchets, notamment sur un sol irrégulier.

Du fait des jeux entre les roues, l'axe en métal et la cuve d'un conteneur, ce roulement peut générer un bruit de l'ordre de 90 DbA à la source.

Et la cuve agissant comme une caisse de résonnance, ce bruit est constitutif de nuisances à l'environnement où le conteneur est utilisé.

Il serait donc souhaitable de limiter la transmission des vibrations en remplaçant le contact plastique/métal par un contact plastique contre plastique, et cela sans adjonctions de pièces fragiles et/ou coûteuses.

Il serait également souhaitable de faciliter l'entretien et le remplacement des roues pour garantir leur fonctionnement silencieux, notamment.

Aucun des documents évoqués ne propose une solution efficace et fiable au problème du bruit provoqué par les vibrations des roues lors du roulage du conteneur et leur transmission par la cuve.

Le but de l'invention est de résoudre ce problème de manière simple, légère et économique.

A cet effet, un objet de l'invention est une roue, spécialement destinée à un conteneur, notamment de collecte de déchets, comportant :
- une cuve formant réceptacle notamment de collecte de déchets, avec éventuellement un couvercle ;
- des moyens de montage de la roue sur la cuve ; et
- un axe de support, faisant partie des moyens de montage et généralement étendu suivant une direction axiale ; la roue étant agencée pour permettre son immobilisation sur l'axe à l'aide des moyens de montage.

La roue comprend un manchon rigidement solidaire d'un moyeu, dont une extrémité libre est pourvue à l'extérieur, d'une portée de guidage sensiblement cylindrique destinée à être logée intérieurement et à rotation, dans une partie de la cuve telle que patte, cette partie appartenant aux moyens de montage, tandis que le manchon présente à l'intérieur, un logement étendu depuis le moyeu et débouchant à l'extrémité libre pourvue de la portée, ce logement étant destiné à l'introduction suivant la direction axiale de l'axe du support.

Le manchon comporte à une extrémité de la portée opposée à l'extrémité libre suivant la direction axiale, un épaulement en saillie périphérique, et un conduit radial, débouchant dans le logement et de guidage d'un doigt de verrouillage de la roue sur l'axe de support suivant la direction axiale.

Suivant une autre caractéristique, le logement du manchon comporte au moins trois protubérances internes radiales de guidage en rotation, destinées à guider avec une surface de contact et des jeux radiaux limités, la roue par rapport à l'axe de support, en position montée de la roue.

Suivant encore une autre caractéristique, le manchon et le moyeu de la roue sont venus de matière et monoblocs, l'un avec l'autre.

Une caractéristique prévoit que le conduit est pourvu d'une lumière radiale d'accès débouchant sur une face du moyeu, tandis que le doigt de verrouillage, qui est sollicité en permanence par un élément élastique tel que ressort, vers l'axe de la roue, est pourvu d'une forme de prise avec un outil, pour permettre le déplacement radial du doigt vers la périphérie extérieure du moyeu, sous l'effet de l'outil et à l'encontre de l'élément élastique, de manière à obtenir le déverrouillage de la roue et de l'axe suivant la direction axiale.

Dans un exemple, la lumière est agencée sur une face du moyeu opposée au manchon, suivant la direction axiale, la lumière présentant éventuellement une forme complexe pour permettre exclusivement l'accès à un outil de forme correspondante.

Un autre objet de l'invention est un conteneur notamment pour la collecte de déchets, et équipé d'au moins une roue telle qu'évoquée plus haut, et par exemple de deux ou quatre roues disposées à proximité d'une paroi de fond de sa cuve.

D'autres caractéristiques de l'invention résultent de la description qui suit, en référence aux dessins annexés, dans lesquels :
- la figure 1 est une vue schématique d'un conteneur selon l'invention à l'état fermé, en élévation, et vu de côté ;
- la figure 2 est une vue partielle en coupe suivant le plan II-II de la figure 1, qui représente une roue selon l'invention, pourvue d'un système de démontage rapide ;
- la figure 3 est une vue similaire à la figure 2, qui représente un autre mode de réalisation du moyeu de roue conforme à l'invention, pourvu de protubérances ou cannelures internes de réduction des jeux radiaux ; et
- la figure 4 est une vue de face suivant la flèche IV de la figure 2, d'un moyeu de roue selon l'invention.

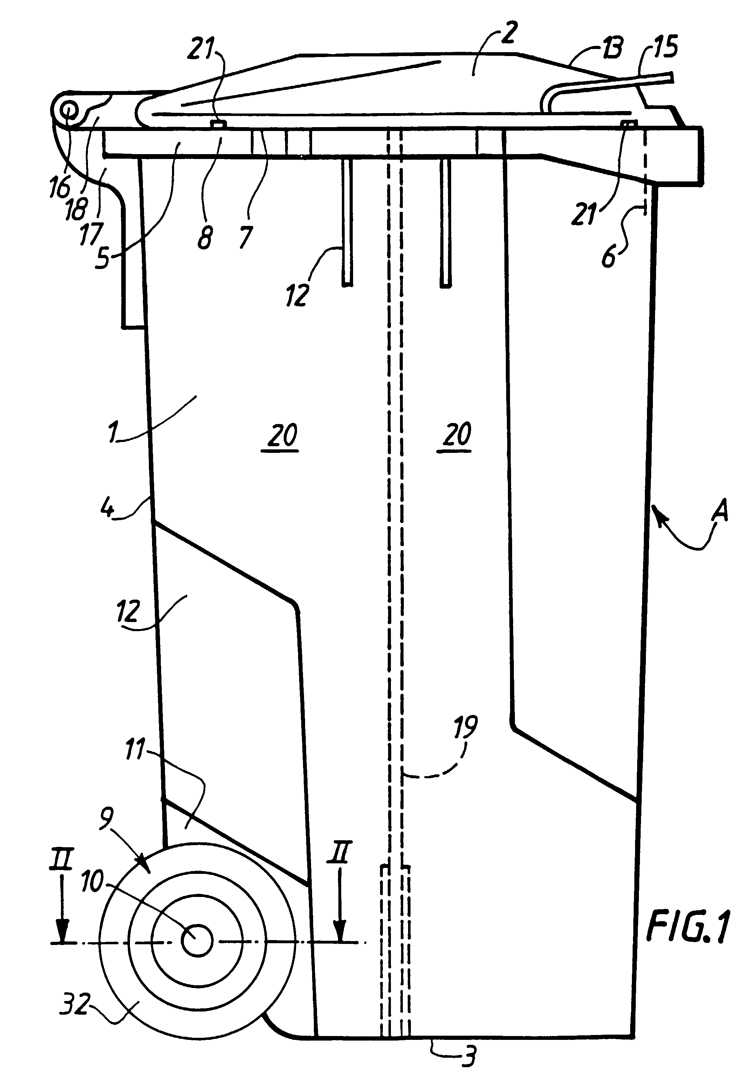

On se réfère dans un premier temps plus spécialement à la figure 1 qui illustre un exemple de conteneur A comportant une partie 1 formant réceptacle et une partie 2 formant couvercle.

La partie 1 ou cuve, comprend un fond 3 et une paroi latérale 4 attenante au fond et pourvue à l'opposé de ce dernier d'un rebord 5 dirigé vers l'extérieur définissant une ouverture 6.

Lorsque le conteneur est dans sa position normale d'utilisation pour le remplissage, le fond 3 est placé à sa partie inférieure, la paroi latérale 4 s'étend sensiblement verticalement et l'ouverture 6 est placée en partie supérieure.

Le rebord 5 comprend lui-même une bordure 7 directement attenante à l'ouverture 6 et une aile tombante 8 attenante à la bordure 7 et dirigée vers le fond 3.

Dans la réalisation représentée, la paroi latérale 4 a un contour sensiblement carré ou rectangulaire avec des coins arrondis.

Par ailleurs, la paroi latérale 4 et le fond 5 ont une forme générale de pyramide tronquée à grande base supérieure et petite base inférieure. Par conséquent, la partie 1 formant réceptacle a un encombrement plus grand vers l'ouverture 6 que vers le fond 3.

Il est également prévu des roues 9 portées par un axe 10 lui-même porté par la paroi latérale 4 à l'endroit d'une réserve 11 ménagée à cette effet.

D'autre part, la paroi 4 peut comporter des reliefs, réserves, configurations telles que 12 fonctionnelles ou esthétiques. Cela vise notamment la rigidification de la partie 1 et son guidage dans un moyen de retournement du conteneur pour pouvoir être vidé.

Le couvercle 2 comporte une face externe 13, visible lorsque le couvercle est en position fermée et une face interne 14 dirigée vers l'ouverture 6 lorsque le couvercle est en position fermée.

Le couvercle 2 est généralement pourvu de moyens de préhension tels qu'une poignée 15.

Le couvercle 2 est associé à la partie formant réceptacle 1 de manière à former un tout avec elle. Cette association est mobile, le couvercle 2 pouvant se trouver dans deux positions extrêmes de fermeture (figure 1) ou d'ouverture.

Dans la réalisation représentée, le couvercle 2 est monté à pivotement sur la partie formant réceptacle 1. A cet effet, il est prévu un axe de pivotement 16. Celui-ci se trouve être sensiblement parallèle à l'axe 10. L'axe 16 est porté par une console 17 attenante à la paroi latérale 4 vers l'ouverture 6 et des bras ou ailes 18 prolongeant la paroi du couvercle 2.

Dans d'autres réalisations pouvant être envisagées bien que non représentées, l'axe de pivotement du couvercle 2 sur la partie formant réceptacle 1 s'étend sensiblement parallèlement à la direction générale de la partie formant réceptacle 1 plutôt que orthogonalement ainsi qu'il a été décrit en référence aux figures.

Dans d'autres réalisations, le couvercle 2 est monté à coulissement par rapport à la partie formant réceptacle 1. Enfin, le couvercle 2 peut être monté sur la partie formant réceptacle 1 grâce à des moyens combinés de pivotement/coulissement.

On comprend qu'ici le couvercle 2, en position totale d'ouverture est dirigé vers le bas, en direction du fond 3 en venant contre la paroi latérale 4 au dessus et sensiblement à l'aplomb des roues 9.

On notera qu'entre la position extrême de fermeture et la position extrême d'ouverture qui vient d'être décrite, il existe une position intermédiaire dans laquelle le couvercle 2 est placé sensiblement à l'horizontale vers l'extérieur de la partie formant réceptacle 1.

Cette position intermédiaire est d'utilisation commune pour ce type de conteneur.

Le conteneur A comporte dans l'exemple illustré, au moins une cloison intérieure 19 s'étendant entre le fond 3 et l'ouverture 6 (ou le couvercle 2) et, de part et d'autre, allant jusqu'à la paroi latérale 4.

Cette cloison 19 est associée rigidement à la partie formant réceptacle 1. Elle sépare cette partie formant réceptacle 1 en au moins deux compartiments 20. Chacun de ces compartiments 20 a une ouverture propre, l'ouverture 6 étant partagée à cet effet par la ou les cloisons 19.

La cloison 19 s'étend, lorsque le conteneur est en position normale d'utilisation pour le remplissage, en position verticale et sensiblement parallèlement aux axes 10 et 16.

Une cloison telle que 19 peut être montée amovible et/ou réglable en position.

Le conteneur tel qu'il vient d'être décrit est préférentiellement réalisé en matière plastique de manière à présenter une rigidité suffisante, à n'être pas d'un poids excessif pour pouvoir être manipulé et, enfin, à pouvoir être entretenu convenablement.

Il est à noter que le couvercle 2 repose ici sur le rebord 5 en position fermée, par l'intermédiaire de plots d'amortissement 21.

Dans l'exemple, les plots sont formés par une paire de patins en matière élastique, telle que du caoutchouc, qui viennent absorber le bruit de fermeture du couvercle et sont disposés au contact couvercle-rebord de cuve.

Le couvercle est ici amorti aussi bien à l'ouverture qu'à la fermeture, adaptable aux cuves existantes. On peut également préférer, contrairement à certaines solutions proposées, disposer le(s) patin(s) élastique(s) absorbant le choc et le bruit de la fermeture, non pas sur le couvercle, mais sur le rebord de cuve. En effet, le rebord de cuve est large et peut recevoir des patins élastiques de taille plus grande.

Cette disposition est également avantageuse parce que le bruit que produit un couvercle, tant à l'ouverture qu'à la fermeture, est fonction de sa masse en mouvement ; en plaçant les patins élastiques sur la cuve et non pas sur le couvercle, on réduit légèrement la masse de ce dernier.

Compte tenu de la position d'un patin amortisseur situé sur un couvercle au niveau de la zone qui décrit le plus grand arc de cercle, on réduit l'énergie cinétique qu'il faut absorber en fin d'ouverture ou en fin de fermeture du couvercle.

Similairement, le conteneur 1 est équipé dans certaines réalisations d'un dispositif limiteur de course à l'ouverture et/ou d'un dispositif de freinage de la fin de cette ouverture, afin de réduire les bruits d'utilisation de ce conteneur.

Dans un exemple non illustré, au moins une aile telle que formée ici par la console 17, associée solidaire de la cuve, est prévue pour que le couvercle puisse être rabattu en position de fermeture sur le rebord, et en position d'ouverture en direction d'une face de la paroi latérale.

Une première aile au moins présente un limiteur de course, agissant sur l'aile 18 associée, limitant le mouvement du couvercle, tandis qu'au moins une aile 17 de la cuve possède un bord inférieur avec un profil convexe. Au moins une aile correspondante 18 du couvercle possède une surface de butée dont un profil concave est sensiblement complémentaire à celui du bord.

Ce dernier et la surface de butée étant agencés pour qu'à l'ouverture du couvercle 2, le bord et la surface viennent en contact partiel en interrompant la rotation du couvercle à une distance déterminée de la paroi latérale 4 de la cuve 1.

Un espace est alors ménagé entre le bord et la surface pour permettre une déformation élastique d'amortissement de l'aile du couvercle 2, jusqu'à ce que le bord et la surface s'épousent sensiblement sans que le couvercle 2 ne heurte la cuve 1.

Décrivons maintenant une roue 9, son assemblage sur la cuve 1 du conteneur A, et ses avantages.

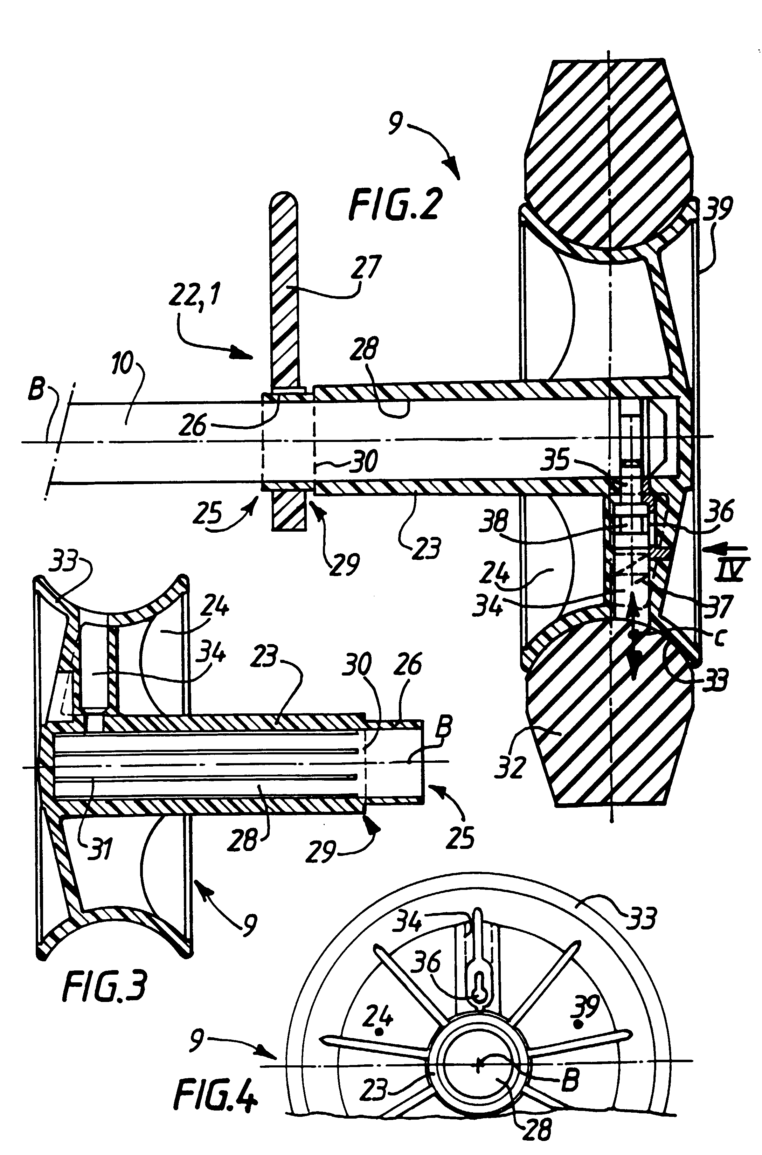

Pour ce faire, on se réfère aux figures 2, 3 et 4 plus spécialement.

La roue 9 est spécialement destinée à un conteneur, notamment de collecte de déchets, tel que le conteneur A.

Ce dernier comporte des moyens 22 de montage de la roue 9 sur la cuve qui coopèrent avec l'axe 10 de support. L'axe 10 faisant partie des moyens de montage 22 est généralement étendu suivant une direction axiale "B". La roue 9 est agencée pour permettre son immobilisation sur l'axe, à l'aide des moyens de montage 22.

Ici, la roue 9 comprend un manchon 23 rigidement solidaire d'un moyeu 24. Une extrémité libre 25 du manchon 23 est pourvue à l'extérieur, d'une portée de guidage 26 sensiblement cylindrique destinée à être logée intérieurement et à rotation, dans une partie de la cuve 1 telle que la patte 27. Cette partie 27 appartient aux moyens de montage 22.

Le manchon 23 présente à l'intérieur, un logement 28 étendu depuis le moyeu 24 et débouchant à l'extrémité libre 25 pourvue de la portée 26. Ce logement 18 est destiné à l'introduction suivant la direction axiale B de l'axe du support 10 dans la roue 9.

Cette structure particulière permet de limiter de manière spécialement efficace et simple, les bruits de roulement.

On obtient une optimisation des fonctions des pièces du conteneur A permettant son roulement.

Ainsi, l'axe 10 en matière rigide telle que métal assume principalement la fonction de support de la roue 9 sur la cuve 1. Il assure également le positionnement de cette roue 9, et participe à son immobilisation (comme on le voit plus loin), ainsi qu'à son guidage en rotation.

Pour sa part, la portée 26 peaufine le guidage en rotation de la roue 9 en limitant les jeux dans les moyens de montage 22. Mais aussi, la partie 26 une fois montée dans la patte 27, qui est pourvue à cet effet d'un alésage, permet d'obtenir un contact doux, ici plastique contre plastique, entre les moyens 22 et la roue 9, notamment lors de la rotation de cette dernière.

Sur les figures 2 et 3, le manchon 23 comporte à une extrémité 29 de la portée 26 opposée à l'extrémité libre 25 suivant la direction axiale B, un épaulement 30 en saillie périphérique.

Suivant l'exemple de la figure 3, le logement 28 du manchon 23 comporte au moins trois protubérances internes 31. Les protubérances 31 sont ici des cannelures radiales de guidage en rotation, destinées à guider avec une surface de contact et des jeux radiaux limités, la roue (9) par rapport à l'axe de support 10, en position montée. Les cannelures 31 sont étendues suivant la direction B, sensiblement depuis le fond du logement 28 jusqu'à proximité du droit de l'épaulement 30.

Notons que dans les exemples, le manchon 23 et le moyeu 24 de la roue 9 sont venus de matière et monoblocs, l'un avec l'autre. Ils sont ici réalisés par moulage injection de matière synthétique. Et un bandage 32 plein, est monté sur une partie fermant jointe 33 du moyeu 24.

Le bandage 32 est en matière synthétique souple et/ou caoutchouc, selon la réalisation des figures 1 et 2.

On prévoit également dans certaines réalisations que le manchon 23 et le moyeu 24 sont deux pièces distinctes, assemblées l'une à l'autre. Néanmoins, la portée est comme ici intégrée au manchon 23 et n'est pas obtenue par ajout d'une pièce en bout de ce manchon.

Sur les figures 2 et 4, on voit que le manchon 23, et ici également le moyeu 24, comporte un conduit radial 34 débouchant dans le logement 28.

Le conduit 34 sert au guidage d'un doigt 35 de verrouillage de la roue 9 sur l'axe 10 du support, suivant la direction axiale B. Ce conduit est pourvu d'une lumière radiale 36 d'accès. La lumière débouche sur une face du moyeu 24.

Le doigt de verrouillage 35, qui est sollicité en permanence par un élément élastique 37 tel que ressort, vers l'axe B ou 10 de la roue 9, est pourvu d'une forme 38.

La forme 38 permet l'entrée en prise d'un outil avec le doigt 35, pour permettre son déplacement radial vers la périphérie extérieure du moyeu 24, sous l'effet de l'outil et à l'encontre de l'élément élastique 37, de manière à obtenir le déverrouillage de la roue et de l'axe suivant la direction axiale.

Ce déplacement radial est illustré par la flèche C sur la figure 2, dans un sens et en sens inverse sous l'effet de l'élément 37.

Dans l'exemple, la lumière est agencée sur une face 39 dite extérieure du moyeu 24, opposée au manchon 23, suivant la direction axiale B.

Cette structure permet un montage et/ou démontage rapide et aisé de la roue 9. Cette dernière peut donc être entretenue et/ou changée de manière à assurer au conteneur A un roulement doux, régulier et silencieux.

Sur la figure 4, la lumière 36 présente une forme complexe, ici sensiblement en "poire". Cette lumière permet exclusivement l'accès au doigt 35 à l'aide d'un outil spécial de forme correspondante, ici en clé. Cela est prévu pour des questions de sécurité, notamment pour empêcher le démontage involontaire des roues 9, ou leur vol.

L'invention vise également un conteneur A notamment pour la collecte de déchets, et équipés au moins une roue telle qu'évoquée plus haut. Dans l'exemple illustré, le conteneur A comporte deux roues 9 disposées à proximité d'une paroi de fond 3 de sa cuve 1. On peut aussi prévoir quatre roues 9, éventuellement directionnelles.

L'invention n'est évidemment pas limitée aux modes de réalisation décrits et/ou illustrés. Par exemple, une roue 9 est montée soit directement comme ici, soit par l'intermédiaire d'une platine pivotante ou non, sur la cuve.

## Revendications

1. Roue (9) spécialement destinée à un conteneur (A), notamment de collecte de déchets, comportant
- une cuve (1) formant réceptacle notamment de collecte de déchets, avec éventuellement un couvercle (2) ;
- des moyens (22) de montage de la roue (9) sur la cuve (1); et
- un axe (10) de support, faisant partie des moyens de montage (22) et généralement étendu suivant une direction axiale (B) ; la roue (9) étant agencée pour permettre son immobilisation sur l'axe (10) suivant la direction axiale (B) à l'aide des moyens de montage (22), la roue (9) comprenant un manchon (23) rigidement solidaire d'un moyeu (24), et présentant à l'intérieur, un logement (28) étendu depuis le moyeu (24) et débouchant à une extrémité libre (25) du dit manchon, ce logement (28) étant destiné à l'introduction suivant la direction axiale (B) de l'axe de support (10), le manchon (23) servant au comportant un conduit radial (34), débouchant dans le logement (28) et guidage d'un doigt (35) de verrouillage de la roue (9) sur l'axe (10) de support suivant la direction axiale (B), caractérisée en ce que l'extrémité libre (25) du manchon (23) est pourvue à l'extérieur, d'une portée de guidage (26) sensiblement cylindrique destinée à être logée intérieurement et à rotation, dans une partie (27) de la cuve (1) telle qu'une patte, cette partie (27) appartenant aux moyens de montage (22), le logement (28) comportant au moins trois protubérances internes (31) radiales de guidage en rotation, destinées à guider avec une surface de contact et des jeux radiaux limités, la roue (9) par rapport à l'axe de support (10), en position montée de la roue (9), et en ce que le manchon (23) comporte à une extrémité (29) de la portée (26) opposée à l'extrémité libre (25) suivant la direction axiale (B), un épaulement en saillie (30) périphérique.

2. Roue (9) selon la revendication 1, caractérisé en ce que le manchon (23) et le moyeu (24) de la roue (9) sont venus de matière et monoblocs, l'un avec l'autre (23, 24).

3. Roue (9) selon l'une quelconque des revendications 1 ou 2, caractérisée en ce que le conduit (34) est pourvu d'une lumière radiale (36) d'accès débouchant sur une face (39) du moyeu (24), tandis que le doigt (35) de verrouillage, qui est sollicité en permanence par un élément élastique (37) tel que ressort, vers l'axe (10, B) de la roue (9), est pourvu d'une forme de prise avec un outil, pour permettre le déplacement (C) radial du doigt (35) vers la périphérie extérieure du moyeu (24), sous l'effet de l'outil et à l'encontre de l'élément élastique (37), de manière à obtenir le déverrouillage de la roue (9) et de l'axe (10) suivant la direction axiale (B).

4. Roue (9) selon la revendication 3, caractérisée en ce que la lumière (36) est agencée sur une face (39) du moyeu (24) opposée au manchon (23), suivant la direction axiale (B), la lumière (36) présentant éventuellement une forme complexe pour permettre exclusivement l'accès à un outil de forme correspondante.

5. Conteneur (A) notamment pour la collecte de déchets, caractérisé en ce qu'il (A) est équipé d'au moins une roue (9) selon l'une quelconque des revendications 1 à 4, et par exemple de deux ou quatre roues (9) disposées à proximité d'une paroi de fond (3) de sa cuve (1).

## Patentansprüche

1. Rad (9), das insbesondere für einen Container (A) bestimmt ist, insbesondere für die Aufnahme von Müll, umfassend:
- eine einen Auffang, insbesondere zur Aufnahme von Müll bildende Schüssel (1), eventuell mit einem Deckel (2);
- Mittel (22) zum Aufbau des Rades (9) auf der Schüssel (1); und
- eine Stützachse (10), die Bestandteil der Mittel zum Aufbau (22) ist und sich allgemein gemäß einer axialen Richtung (B) erstreckt; wobei das Rad (9) angeordnet ist, um seine Feststellung auf der Achse (10) gemäß der axialen Richtung (B) mit den Mitteln zum Aufbau (22) zu erlauben, wobei das Rad (9) eine Muffe (23) umfaßt, die steif mit einer Anlagefläche (24) verbunden ist und im Innern eine Aufnahme (28) aufweist, die sich von der Anlagefläche (24) aus erstreckt und in ein freies Ende (25) besagter Muffe einmündet, wobei diese Aufnahme (28) zur Einführung gemäß der axialen Richtung (B) der Stützachse (10) bestimmt ist, wobei die Muffe (23) eine radiale Leitung (34) umfaßt, die in die Aufnahme (28) einmündet, die der Führung eines Fingers (35) zur Verriegelung des Rades (9) auf der Stützachse (10) gemäß der axialen Richtung (B) dient, dadurch gekennzeichnet, daß das freie Ende (25) der Muffe (23) außen mit einer deutlich zylindrischen Führungsfläche (26) versehen ist, die dazu bestimmt ist, innen und rotierend in einem Teil (27) der Schüssel (1), wie zum Beispiel einer Befestigungsklemme, untergebracht zu werden, wobei dieser Teil (27) zu den Mitteln zum Aufbau (22) gehört, wobei die Aufnahme (28) wenigstens drei interne radiale Protuberanzen (31) zur Führung in Rotation umfassen, die dazu bestimmt sind, das Rad (9) mit einer Kontaktfläche und den begrenzten radialen Spielräumen im Verhältnis zur Stützachse (10) in aufgebauter Position des Rades (9) zu führen, und dadurch, daß die Muffe (23) an einem äußeren Ende (29) der Führungsfläche (26) gegenüber dem freien äußeren Ende (25) gemäß der axialen Richtung (B) einen vorstehenden peripherischen Absatz (30) umfaßt.

2. Rad (9) gemäß Anspruch 1, dadurch gekennzeichnet, daß die Muffe (23) und die Anlagefläche (24) des Rades (9) eine mit der anderen (23, 24) aus einem Material und aus einem Stück gegossen sind.

3. Rad (9) gemäß Anspruch 1 oder 2, dadurch gekennzeichnet, daß die Leitung (34) mit einer radialen Zugangsöffnung (36) versehen ist, die auf einer Seite (39) der Anlagefläche (24) einmündet, während der Finger (35) zur Verriegelung, der permanent durch ein elastisches Element (37) wie zum Beispiel eine Feder, gegen die Achse (10, B) des Rades (9) angesprochen wird, mit einer Greifform mit einem Werkzeug versehen ist, um das radiale Versetzen (C) des Fingers (35) zur äußeren Peripherie der Anlagefläche (24) unter der Wirkung des Werkzeugs und zum elastischen Element (37) hin derart zu erlauben, daß die Entriegelung des Rades (9) und der Achse (10) gemäß der axialen Richtung (B) erreicht wird.

4. Rad (9) gemäß Anspruch 3, dadurch gekennzeichnet, daß die Öffnung (36) auf einer Seite (39) der der Muffe (23) gegenüberliegenden Anlagefläche (24) gemäß der axialen Richtung (B) angeordnet ist, wobei die Öffnung (36) eventuell eine komplexe Form aufweist, um ausschließlich den Zugang zu einem Werkzeug in entsprechender Form zu erlauben.

5. Container (A), insbesondere zur Aufnahme von Müll, dadurch gekennzeichnet, daß er (A) mit wenigstens einem Rad (9) gemäß irgendeinem der Ansprüche 1 bis 4 ausgerüstet ist, und zum Beispiel mit zwei oder vier Rädern (9), die in der Nähe einer Bodenwand (3) seiner Schüssel (1) angeordnet sind.

## Claims

1. A wheel (9) especially intended for a container (A), notably for waste collection, having:
- a bin (1) forming a receptacle, notably for waste collection, with possibly a lid (2);
- means (22) of mounting the wheel (9) on the bin (1); and
- a support shaft (10), forming part of the mounting means (22) and generally extending in an axial direction (B); the wheel (9) being arranged to enable it to be immobilised on the shaft (10) in the axial direction (B) using mounting means (22), the wheel (9) comprising a sleeve (23) rigidly attached to a hub (24)and having inside a housing (28) extending from the hub (24) and opening out at a free end (25) of said sleeve, this housing (28) being intended for inserting the support shaft (10) in the axial direction (B), the sleeve (23) having a radial conduit (34), opening out in the housing serving for guiding a finger (35) for locking the wheel (9) on the support shaft (10) in the axial direction (B), characterised in that the end of the sleeve (23) is provided on the outside with a substantially cylindrical guidance surface (26) intended to be housed internally and rotatably, in a part (27) of the bin (1) such as a lug, this part (27) belonging to the mounting means (22), the housing (28) having at least three radial internal protuberances (31) for guidance in rotation, intended to guide, with a contact surface and limited radial clearances, the wheel (9) with respect to the support shaft (10), in the mounted position of the wheel (9), and in that the sleeve (23) has, at one end (29) of the surface (26) opposite to the free end (25) in the axial direction (B), a shoulder in peripheral projection (30).

2. A wheel (9) according to Claim 1, characterised in that the sleeve (23) and the hub (24) of the wheel (9) are made from the same material and in a single piece with each other (23, 24).

3. A wheel (9) according to either one of Claims 1 or 2, characterised in that the conduit (34) is provided with a radial access aperture (36) opening out on one face (39) of the hub (24), whilst the locking finger (35), which is continuously acted on by an elastic element (37) such as a spring, towards the shaft (10, B) of the wheel (9), is provided with a shape for engagement with a tool, to allow the radial movement (C) of the finger (35) towards the external periphery of the hub (24), under the effect of the tool and counter to the elastic element (37), so as to obtain the unlocking of the wheel (9) and of the shaft (10) in the axial direction (B).

4. A wheel (9) according to Claim 3, characterised in that the aperture (36) is arranged on a face (39) of the hub (24) opposite to the sleeve (23), in the axial direction (B), the aperture (36) possibly having a complex shape to allow exclusively access to a tool of corresponding shape.

5. A container (A) notably for waste collection, characterised in that it (A) is equipped with at least one wheel (9) according to any one of Claims 1 to 4, and for example two or four wheels (9) disposed close to a bottom wall (3) of its bin (1).
